# EUROPEAN PATENT APPLICATION

(11) **EP 3 232 002 A1**
(43) Date of publication of application: **18.10.2017**
(21) Application number: 17161459.7
(22) Date of filing: 16.03.2017
(51) Int. Cl.: F01D 5/18

(54) **IMPINGEMENT PLATE WITH STRESS RELIEF FEATURE**

(30) Priority: 11.04.2016 US 201662320847 P
(71) Applicant: Rolls-Royce Corporation, Indianapolis, Indiana 46225 (US)
(72) Inventor: Moga, Corina, Carmel, IN 46032 (US)
(74) Representative: Dauncey, Mark Peter

(57) **Abstract**

An impingement plate adapted for use in a gas turbine engine is disclosed. The plate includes a plurality of holes for directing cooling air. The plate includes a stress relief feature to prevent fatigue cracking at the coupling of the plate to the turbine engine and at the holes.

## Description

### CROSS REFERENCE TO RELATED APPLICATIONS

This application claims priority to and the benefit of U.S. Provisional Patent Application Number 62/320,847 filed 11 April 2016, the disclosure of which is now expressly incorporated herein by reference.

### FIELD OF THE DISCLOSURE

The present disclosure relates generally to a cooling plate used in gas turbine engines, and more specifically to an impingement plate with a stress relief feature.

### BACKGROUND

Engines, and particularly gas turbine engines, are used to power aircraft, watercraft, power generators and the like. Gas turbine engines typically include a compressor, a combustor, and a turbine. The compressor compresses air drawn into the engine and delivers high pressure air to the combustor. The combustor is a component or area of a gas turbine engine where combustion takes place. In a gas turbine engine, the combustor receives high pressure air and adds fuel to the air which is burned to produce hot, high-pressure gas. After burning the fuel, the hot, high-pressure gas is passed from the combustor to the turbine. The turbine extracts work from the hot, high-pressure gas to drive the compressor and residual energy is used for propulsion or sometimes to drive an output shaft.

Turbines typically include alternating stages of static and rotating vanes whose tips rotate along bladetracks; the static vanes redirect hot, high-pressure air moving from the combustor through the turbine and rotating vanes extract mechanical energy from the hot, high pressure air. Cooling airflow is often used to prevent vane fatigue from the heat applied to the vanes by the hot, high pressure air. Not only do the vanes themselves become hot, but the cavities forward and aft the rotor support that contain the turbine wheel are required to be maintained below a particular temperature. Cooling air is typically directed and circulated radially inward through the static and rotating vanes to cool multiple components in the system.

Typical air circulation in a vane occurs via one or more impingement plates that control the direction and communication of cooling air into the vanes. This results in a mismatch of temperatures at the coupling between the impingement plate and the mounting point on the vane or bladetrack, which increases stresses and leads to cracking or failure at the coupling.

Accordingly, new techniques and configurations are needed to address the stress build up and failure that occurs due to the thermal gradient at the coupling of the impingement plate to the vane or bladetrack.

### SUMMARY

The present disclosure may comprise one or more of the following features and combinations thereof.

According to one aspect of the present disclosure a plate for cooling a vane or bladetrack is provided. The plate includes a central portion including a plurality of spaced apart cooling holes; a coupling portion surrounding the central portion configured to be coupled to an endwall or a blade track; and a stress relief feature extending between the central portion and the coupling portion that reduces stress at the coupling portion.

In some embodiments, the stress relief feature comprises an endless sidewall extending between the central portion and coupling portion so that the central portion is parallel to the coupling portion

In some embodiments, the endless sidewall comprises a curved sidewall.

In some embodiments, the coupling portion and the vane are brazed together.

In some embodiments, the coupling portion and the bladetrack are brazed together.

According to another aspect of the present disclosure, an impingement plate cooling system is provided. The system comprises a vane or a bladetrack; at least one impingement plate having a central cooling portion and a coupling surface coupled to the vane or the bladetrack; and stress relief feature in the at least one impingement plate by increasing the compliance of the plate so that the coupling surface maintains the coupling to the vane or the bladetrack.

In some embodiments, the central cooling portion comprises a plurality of spaced apart cooling holes.

In some embodiments, the stress relief feature comprises an endless curved sidewall extending between the central portion and the coupling surface so that the coupling surface lies between a central portion of an outer endwall of the vane and the central cooling portion.

In some embodiments, the stress relief feature comprises an endless curved sidewall extending between the central portion and the coupling surface so that the central cooling portion lies between a central portion of an outer endwall of the vane and the stress relief feature.

In some embodiments, the coupling surface and an outer endwall of the vane are brazed together.

In some embodiments, the stress relief feature comprises a curved sidewall, wherein the curved sidewall is adjacent to the brazed coupling between the coupling surface and the outer endwall.

In some embodiments, the curved sidewall extends convexly away from the outer endwall of the vane.

In some embodiments, the curved sidewall extends in a concave manner towards the outer endwall of the vane.

In some embodiments, the stress relief feature comprises an endless sidewall extending between the central portion and the coupling surface so that the coupling surface lies between a radially inward surface of the bladetrack and the central cooling portion.

In some embodiments, the stress relief feature comprises an endless sidewall extending between the central portion and the coupling surface so that the central cooling portion lies between a radially inward surface of the blade track and the stress relief feature.

In some embodiments, the coupling surface and a raised abutment of the bladetrack are brazed together.

In some embodiments, the stress relief feature comprises a curved sidewall, wherein the curved sidewall is adjacent to the brazed coupling between the coupling surface and the abutment.

In some embodiments, the system further comprises further a plurality of bladetracks coupled to impingement plates forming a cooling shroud.

According to another aspect of the present disclosure, a method for reducing the stress at an impingement plate joint includes providing at least one impingement plate having a plurality of cooling holes and a stress relief feature, positioning the plurality of cooling holes in a plane spaced apart from a coupling plane defined by a coupling portion of the impingement plate and a vane endwall or bladetrack and coupling the impingement plate at a coupling portion together with a vane endwall or a bladetrack via brazing.

In some embodiments, the stress relief feature comprises an endless curved sidewall.

These and other features of the present disclosure will become more apparent from the following description of the illustrative embodiments.

### BRIEF DESCRIPTION OF THE DRAWINGS

Fig. 1 is a perspective cut-away view of a turbine engine showing that the engine includes a turbine arranged aft of a compressor;
Fig. 2 is a sectional view of a portion of the turbine of Fig. 1 showing a stationary vane with an outer endwall and a rotary vane with a bladetrack;
Fig. 3 is a perspective view of an impingement plate with a stress relief feature for mounting in the outer endwall and bladetrack shown in Figs. 1-2;
Fig 4A is a sectional view of another vane similar to the vane of Fig 2 showing an impingement plate with a stress relief feature coupled to the outer endwall to extend away from the outer endwall;
Fig. 4B is a sectional view of a portion of the turbine of Fig. 1 showing a vane mounted via a rotor support at an inner endwall having an impingement plate with a stress relief feature coupled to extend toward outer endwall;
Fig. 5A is a sectional view of a portion of the turbine in Fig. 2 showing a blade track having an impingement plate with a stress relief feature coupled to an interior wall of the blade track with the stress relief feature extending away from the interior wall;
Fig. 5B is a sectional view of another blade track similar to the blade track of Fig. 2 showing an impingement plate coupled to the interior wall of the blade track to extend toward the interior wall;
Fig. 6 is a plan view of another vane member similar to the vane of Fig. 2 showing a plurality of impingement plates coupled to the outer endwall to extend away from the outer endwall;
Fig. 6A is an exploded view of the vane member of Fig. 6 exposing cavities in the outer endwall that are cooled by the plurality of impingement plates.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

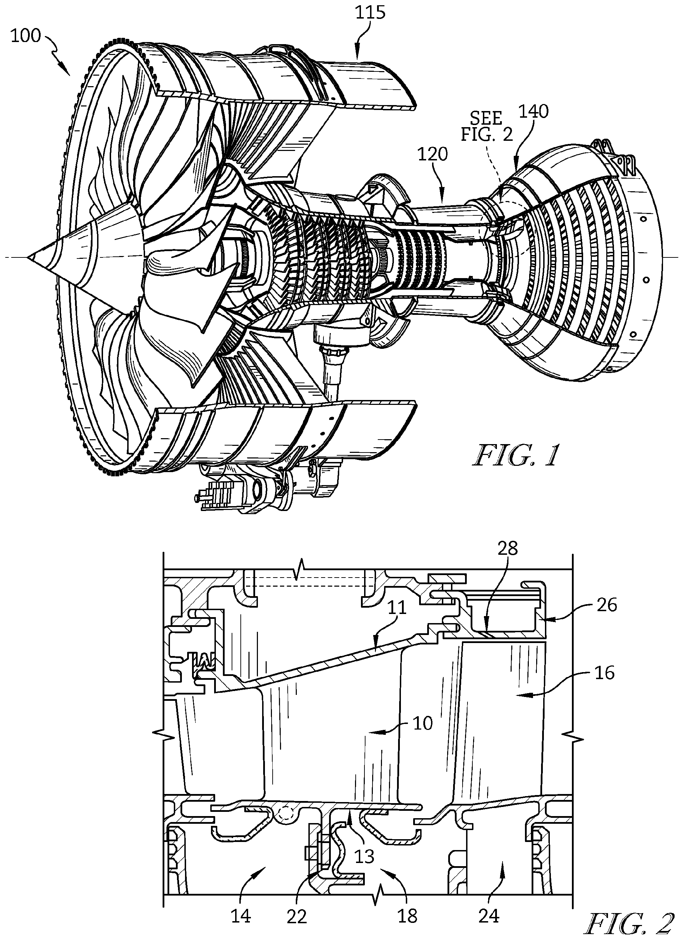

The arrangement of an illustrative vane 10 in a gas turbine engine 100 is shown in Fig. 1. The gas turbine engine 100 includes a compressor 115, a combustor 120, and a turbine 140 housing a plurality of stationary and rotating vanes 10, 16. An output shaft is driven by the turbine 140 and may drive a propeller, a gearbox, a pump, or fan depending on the application of the gas turbine engine 100.

The stationary vane 10 is located in the turbine 140 and secured via a rotor support 22 to a disk (not shown) that defines a forward rotor/stator cavity 16 and an aft rotor/stator cavity 18 beneath the vane blade 10 as seen in Fig. 2. In some embodiments, trailing edge holes (not shown) may be machined in the trailing edge of the vane. Vane 10 includes an outer platform 11, inner platform, 13, and vane blade 10 extending therebetween.

The rotating vane 16 is located in the turbine and secured at the inner end via a support 24. Bladetrack 26 lies radially spaced apart from the outer end of the rotating vane 16 and couples to the outer endwall 11 of the stationary vane 10. Bladetrack 26 can include one or more holes 28 extending through a radially inner surface 36 that lies adjacent to the rotating vane 16

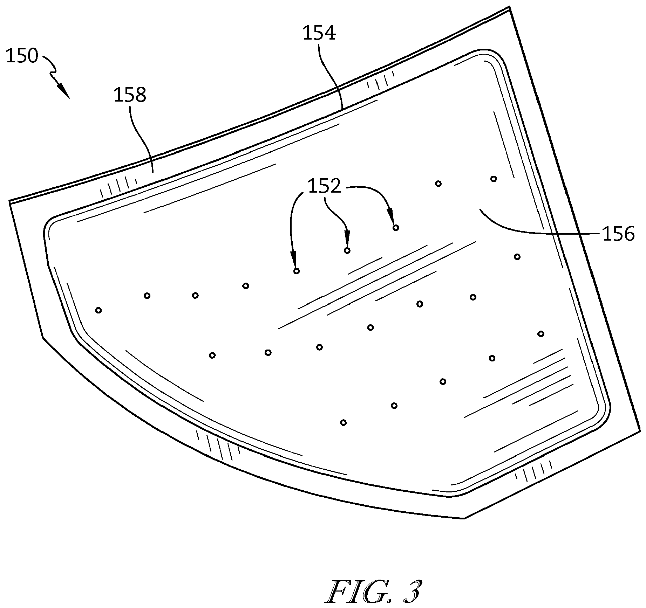

Stationary vane outer wall 11 and/or the bladetrack 16 may be provided with an impingement plate 150 as seen in Fig. 3 to direct manage cooling airflow to the vanes 10, 16. Impingement plate 150 includes a central portion 156, a coupling portion 158 and a stress relief feature 154. Central portion 156 and coupling portion 158 lie in substantially parallel planes. Stress relief feature 154 is a compliant endless curved sidewall that extends circumferentially between and connects the central portion 156 with the coupling surface 158. Impingement plate central portion 156 includes a plurality of cooling holes 152. The impingement plate is preferably made from Hastelloy® X or Haynes-230®, but may be other metal alloys that exhibit desired compliance characteristics. The boundary shape of impingement plate 150 as defined by the coupling portion 158 is shown for illustration and may be configured in a plurality of different shapes depending on the endwall geometry which it is coupled to.

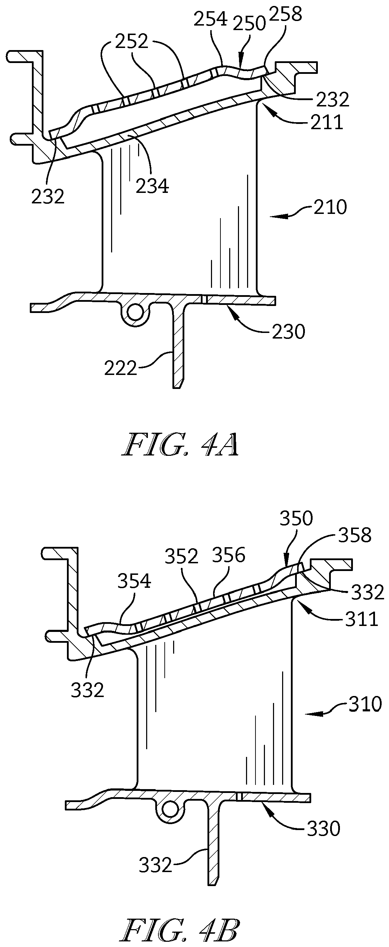

As seen in Fig. 4A, a stationary vane 210 is provided with an impingement plate 250 coupled via coupling surface 258 to the outer wall 211 at a raised abutment 232. Central portion 256 of impingement plate 250 includes a plurality of holes 252 in fluid communication with endwall 211. In some embodiments, the plurality of holes may also be in communication with an interior of the vane 210 (not shown). Compliant stress relief feature 254 is configured to extend away from endwall 211 so that the coupling surface 258 lies between the outer endwall 211 of the vane 210 and the central cooling portion 256 of the impingement plate 250. Coupling surface 258 can be coupled to the raised abutment 232 via techniques such as brazing or welding.

Fig. 4B illustrates a stationary vane 310 similar to the vane of 4A, with an impingement plate 350 coupled via coupling surface 358 to outer wall 311 at a raised abutment 332. Unlike Fig. 4A, the impingement plate 350 is coupled to the raised abutment 332 so that the stress relief feature 354 extends toward the endwall 311. In this embodiment, central cooling portion 356 having cooling holes 352 lies between the outer endwall 311 of the vane 310 and the coupling surface of the 358 of the impingement plate 350. This locates holes 352 in the cooling central portion 356 in closer fluid communication to the outer endwall 311.The coupling surface 358 can be coupled to the raised abutment 332 using similar techniques disclosed above with respect to Fig. 4A.

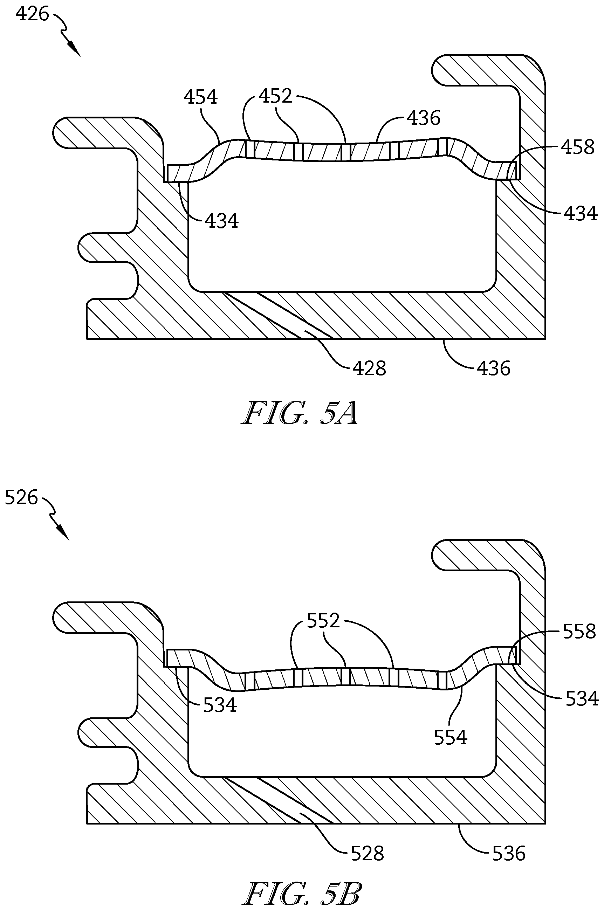

Impingement plate 150 of Fig. 3 can also be mounted to a bladetrack as seen in Figs. 5A-5B. Bladetrack 426 in Fig. 5A illustrates impingement plate 450 mounted via coupling surface 458 on top of abutment ledge 434 so that the compliant stress relief feature 454 extends away from a radially inward surface 436 of the bladetrack 426. The coupling surface 458 lies between the central cooling portion 456 of the impingement plate 450 and the radially inward surface 436 of the bladetrack 426 in this configuration. Holes 452 in the central cooling portion 456 are in fluid communication with hole 428 on the radially inner surface 436. The coupling surface 458 can be coupled to the abutment ledge 434 using similar techniques disclosed above with respect to Figs. 4A-4B. In some embodiments, a plurality of bladetracks 426 are coupled to impingement plates 450 forming a cooling shroud.

Fig. 5B depicts another illustrative bladetrack 526 for use in the gas turbine engine 100. The bladetrack 526 is substantially similar to the bladetrack shown in Figs. 1-2 and 5A described herein. Accordingly similar reference numbers in the 500 series not specifically discussed herein indicate features that are common between bladetrack 426 and bladetrack 526. The description of bladetrack 426 is hereby incorporated by reference to apply to the bladetrack 526 except in instances where it conflicts with the specific description and drawings of bladetrack 526.

The bladetrack 526 is coupled to an impingement plate 550 so that the stress relief feature 554 extends toward the radially inward surface 536. In this embodiment the cooling central portion 556 of the impingement plate 550 lies closer to the radially inward surface 536 than the embodiment of Fig. 5A. In this configuration, cooling central portion 556 lies between the radially inner surface 536 of the bladetrack 526 and the coupling surface 558. This locates holes 552 in the cooling central portion 556 in closer fluid communication closer to one or more holes 528 and the radially inner surface 536.

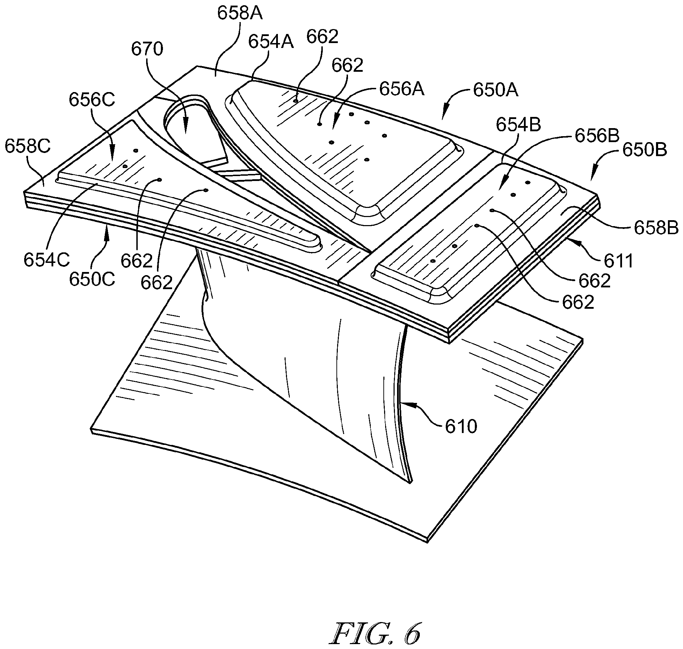

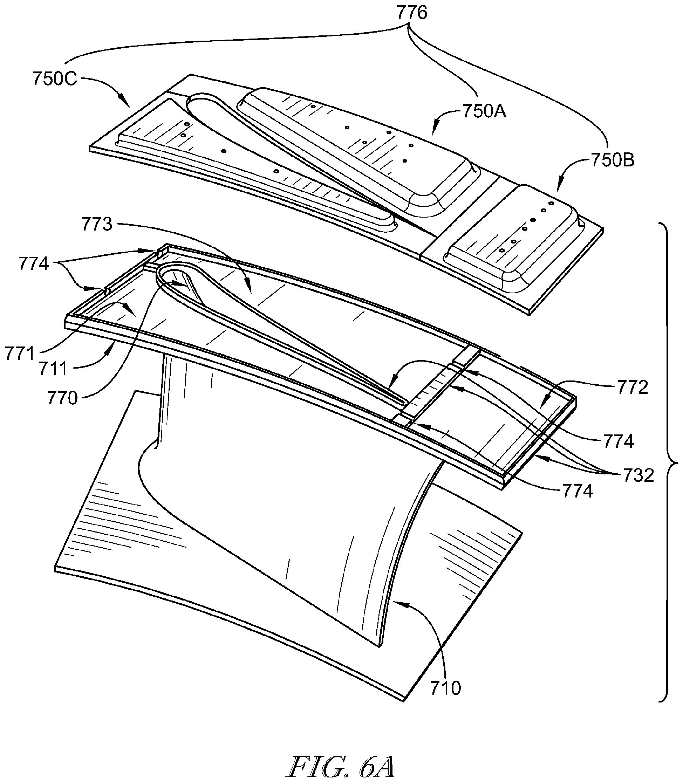

As seen in Fig. 6, a stationary vane 610 is provided with a plurality of impingement plates 650A, 650B, 650C coupled via coupling surfaces 658A, 658B, 658C to the outer wall 611 at a raised abutment (seen in Fig. 6A). Central portion 656A, 656B 656C of impingement plates includes a plurality of holes 652A, 652B, 652C in fluid communication with endwall 611. Compliant stress relief features 654A, 654B, 654C are configured to extend away from endwall 611 so that the coupling surfaces 658A, 658B, 658C lie between the outer endwall 611 of the vane 610 and the central cooling portions 656A, 656B, 656C of the impingement plates 650A, 650B, 650C. In this embodiment, an internal cooling passage of the vane 670 is not in fluid communication with any of the cooling holes 662 of the impingement plates 650A, 650B, 650C.

Fig. 6A illustrates an exploded view of the cooling system of Fig. 6. Reference numbers in the 700 series correspond to reference numbers in the 600 series unless otherwise indicated. Impingement plate 776, as depicted can be a single plate or a plurality of independent plates 750A 750B 750C. The plates are secured via brazing to complimentary shaped raised abutment 732 which defines cavities 771, 772, 773 in the endwall 711.The cavities 771, 772, 773 are connected via channels 774 through the raised abutment 732 that direct cooling air to exit one side of the endwall 711. Cavities 771, 772, and 773 are not in communication with the internal cooling passage of the vane 770. Although the number of plates and cavities is shown as three for the purposes of illustration, fewer or more plates and cavities are contemplated. Furthermore, similar to Figs. 4B, 5B, the impingement plates 776 may be configured alternatively to extend toward the endwall 711.

In a method of operation for reducing stress at the impingement plate joint, an impingement plate, according to one of the embodiments described above is provided. The impingement plate is positioned so that the plurality of cooling holes lie in a plane spaced apart from and substantially parallel to a coupling plane, where the plate couples to a bladetrack or vane. The cooling hole plane may be radially located inward or outward relative to the coupling plane. The impingement plate is secured to either a vane or a bladetrack. The securing of the impingement plate and the vane or bladetrack together can be done via brazing. This process can be repeated for a plurality of impingement plates to secure them to a plurality of vanes and/or bladetracks in a turbine engine as illustrated in Figs. 1-2.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A plate for cooling an endwall or blade track of a vane comprising:
a central portion including a plurality of spaced apart cooling holes;
a coupling portion surrounding the central portion configured to be coupled to an endwall or a blade track; and
a stress relief feature extending between the central portion and the coupling portion that reduces stress at the coupling portion.

2. The plate of claim 1, wherein the stress relief feature comprises an endless sidewall extending between the central portion and coupling portion so that the central portion is parallel to the coupling portion, optionally wherein the endless sidewall comprises a curved sidewall.

3. The plate of claim 1, wherein the coupling portion and the vane are brazed together or the coupling portion and the bladetrack are brazed together.

4. An impingement plate cooling system comprising:
a vane or a bladetrack;
at least one impingement plate having a central cooling portion and a coupling surface coupled to the vane or the bladetrack; and
a stress relief feature for relieving stress in the at least one impingement plate by increasing the compliance of the plate so that the coupling surface maintains the coupling to the vane or the bladetrack.

5. The impingement plate of claim 4, wherein the central cooling portion comprises a plurality of spaced apart cooling holes.

6. The impingement plate of claim 4, wherein the stress relief feature for relieving stress comprises an endless curved sidewall extending between the central portion and the coupling surface so that the coupling surface lies between a central portion of an outer endwall of the vane and the central cooling portion.

7. The impingement plate of claim 4, wherein the stress relief feature comprises an endless curved sidewall extending between the central portion and the coupling surface so that the central cooling portion lies between a central portion of an outer endwall of the vane and the stress relief feature.

8. The impingement plate system of claim 4, wherein the coupling surface and an outer endwall of the vane are brazed together.

9. The impingement plate of claim 8, wherein the stress relief feature comprises a curved sidewall, wherein the curved sidewall is adjacent to the brazed coupling between the coupling surface and the outer endwall.

10. The impingement plate of claim 9, wherein the curved sidewall extends: (i) convexly away from the outer endwall of the vane; or (ii) in a concave manner towards the outer endwall of the vane.

11. The impingement plate of claim 4, wherein the stress relief feature comprises an endless sidewall extending between the central portion and the coupling surface so that:
(i) the coupling surface lies between a radially inward surface of the bladetrack and the central cooling portion; or
(ii) the central cooling portion lies between a radially inward surface of the blade track and the stress relief feature.

12. The impingement plate system of claim 4, wherein the coupling surface and a raised abutment of the bladetrack are brazed together, optionally wherein the stress relief feature comprises a curved sidewall, wherein the curved sidewall is adjacent to the brazed coupling between the coupling surface and the abutment.

13. The impingement plate cooling system of claim 4, further comprising a plurality of bladetracks coupled to impingement plates forming a cooling shroud.

14. A method for reducing the stress at an impingement plate joint comprising:
providing at least one impingement plate having a plurality of cooling holes and a stress relief feature;
positioning the plurality of cooling holes in a plane spaced apart from a coupling plane defined by a coupling portion of the at least one impingement plate and a vane endwall or bladetrack; and
coupling the at least one impingement plate at a coupling portion together with a vane endwall or a bladetrack via brazing.

15. The method of claim 14, wherein the stress relief feature comprises an endless curved sidewall.
